(19) Europäisches Patentamt
European Patent Office
Office européen des brevets

(11) **EP 4 394 990 A1**

(12) **EUROPEAN PATENT APPLICATION**
published in accordance with Art. 153(4) EPC

(43) Date of publication:
**03.07.2024 Bulletin 2024/27**

(21) Application number: **22958955.1**

(22) Date of filing: **16.12.2022**

(51) International Patent Classification (IPC):
**H01M 10/0569** (2010.01)   **H01M 10/0567** (2010.01)
**H01M 10/052** (2010.01)

(52) Cooperative Patent Classification (CPC):
Y02E 60/10

(86) International application number:
**PCT/CN2022/139579**

(87) International publication number:
**WO 2024/077765 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 CN 202211260215**

(71) Applicant: **Sunwoda Mobility Energy Technology Co., Ltd.**
**Shenzhen, Guangdong 518107 (CN)**

(72) Inventors:
• **CHENG, Shouqiang**
  **Shenzhen, Guangdong 518107 (CN)**
• **WANG, Chengxiang**
  **Shenzhen, Guangdong 518107 (CN)**
• **HE, Xuan**
  **Shenzhen, Guangdong 518107 (CN)**
• **ZHANG, Jianwei**
  **Shenzhen, Guangdong 518107 (CN)**
• **CHU, Chunbo**
  **Shenzhen, Guangdong 518107 (CN)**

(74) Representative: **Groth & Co. KB**
**P.O. Box 6107**
**102 32 Stockholm (SE)**

(54) **SECONDARY BATTERY AND USE THEREOF**

(57) The present application belongs to the technical field of batteries, and particularly relates to a secondary battery. The secondary battery provided by the present application comprises a positive electrode plate, a negative electrode plate and electrolyte, wherein the electrolyte comprises an organic solvent, and the organic solvent comprises a cyclic ester solvent and a chain ester solvent; the secondary battery parameter satisfies Formula (1). The secondary battery has good dynamic performance at low temperature, and has good capacity retention rate and lower impedance under the low temperature condition by adjusting the electrolyte and the negative electrode plate and the combined action of the electrolyte and the negative electrode plate.

EP 4 394 990 A1

**Description**

**RELATED APPLICATION**

The present application claims priority of the Chinese Patent Application number 202211260215.8, filed on October 14, 2023 before the China National Intellectual Property Administration, with the title of "Secondary Battery", which is hereby incorporated by reference in its entirety.

**FIELD OF THE INVENTION**

The application belongs to the technical field of batteries, and particularly relates to a secondary battery.

**BACKGROUND**

Secondary batteries, such as lithium ion batteries, are the most popular energy storage systems due to their high specific energy, long life, and environmental friendliness characteristics, and are now widely used in consumer electronics, electric vehicles, energy storage, and other fields. With the improvement of the permeability of new energy automobiles and the rapid development of energy storage markets, the requirements of people on the performance of lithium ion batteries are continuously improved; and the development of a lithium ion battery with low cost, high safety and wide applicability is an urgent task in the development of the lithium battery industry at present.
The secondary battery has the defects of low capacity retention rate, large resistance and the like in a low temperature environment, and the large-scale use of the secondary battery is limited. Therefore, it is necessary to improve the dynamics performance at low temperature of the secondary battery.

**SUMMARY OF THE INVENTION**

Therefore, a technical problem to be solved by the present application is to overcome the defects of poor dynamic performance at low temperature and the like of the lithium ion battery in the prior art, thereby providing a lithium ion battery.
To this end, the present application provides the following technical solutions.
The present application provides a secondary battery, which comprises a positive electrode plate, a negative electrode plate and electrolyte, wherein the negative electrode plate comprises a negative current collector and a negative electrode active material layer arranged on the negative current collector; the electrolyte comprises an organic solvent, and the organic solvent comprises a cyclic ester solvent and a chain ester solvent;

the secondary battery satisfies Formula (1),

$$27 > \frac{Mel. \times \sigma}{Cap. \times PD \times \eta \times \beta} > 18 \qquad \text{Formula (1)}$$

wherein *Mel.* is a value of the weight of the electrolyte in the secondary battery, and the unit of the weight is g;
$\sigma$ is a value of the conductivity of the electrolyte, and the unit of the conductivity is mS/cm;
*Cap.* is a value of a designed theoretical capacity of the secondary battery, and the unit of the designed theoretical capacity is Ah;
PD is a value of a compacted density of the negative electrode active material layer, and the unit of the compacted density is g/cm$^3$;
$\eta$ is a value of the viscosity of the electrolyte, and the unit of the viscosity is mPa·s; and
$\beta$ is a mass ratio of the cyclic ester solvent to the chain ester solvent in the electrolyte.

Optionally, the secondary battery satisfies at least one of (1) to (3):

(1) the mass ratio $\beta$ of the cyclic ester solvent to the chain ester solvent is 0.25 to 0.85, and optionally 0.33 to 0.82;
(2) the conductivity $\sigma$ of the electrolyte has a value of 9 to 13, optionally 9.5 to 12.5;
(3) the viscosity $\eta$ of the electrolyte has a value of 2 to 5, optionally 2.5 to 4.5; and
(4) the weight *Mel.* of the electrolyte has a value of 11 to 16, optionally 13 to 15.

Optionally, the PD has a value of 1.1 to 1.65, optionally 1.2 to 1.6.

Optionally, the chain ester solvent comprises at least one of a chain carbonate and a chain carboxylate;

the chain carbonate comprises at least one of dimethyl carbonate, diethyl carbonate, dipropyl carbonate, ethyl methyl carbonate and propyl methyl carbonate; and
the chain carboxylate comprises at least one of ethyl acetate, propyl acetate, methyl propionate, ethyl propionate, propyl propionate, methyl butyrate and ethyl butyrate.

Optionally, the cyclic ester solvent comprises at least one of ethylene carbonate, propylene carbonate and butylene carbonate.

Optionally, the electrolyte further comprises an additive, wherein the additive comprises at least one of a silicon-containing additive, a cyclic carbonate additive and a sulfur-containing additive.

Optionally, the additive satisfies at least one of the following features:

(a) the silicon-containing additive comprises at least one of tris(trimethylsilyl) phosphite, tris(trimethylsilyl) phosphate, tris(trimethylsilyl) borate, trimethylfluorosilane and heptamethyldisilazane, and the mass fraction of the silicon-containing additive is 0.1 wt% to 4 wt% based on the mass of the electrolyte;
(b) the cyclic carbonate additive comprises at least one of vinylene carbonate, vinyl ethylene carbonate, fluoroethylene carbonate and difluoroethylene carbonate, and the mass fraction of the cyclic carbonate additive is 0.05 wt% to 3 wt% based on the mass of the electrolyte; and
(c) the sulfur-containing additive comprises at least one of 1,3-propanesultone and ethylene sulfate, and the mass fraction of the sulfur-containing additive is 0.05 wt% to 3 wt% based on the mass of the electrolyte.

Optionally, the additive of electrolyte comprises a silicon-containing additive and a sulfur-containing additive. Based on the mass of the electrolyte, the content of the silicon-containing additive is $W_{si}$%, the content of the sulfur-containing additive is $W_s$%, satisfying $0.3 \leq W_{si}+W_s \leq 4$ and $0.1 \leq W_{si}/W_s \leq 5$.

Optionally, the electrolyte further comprises a lithium salt additive, wherein the lithium salt additive comprises at least one of lithium bis(fluorosulfonyl)imide, lithium bis(trifluoromethanesulfonyl)imide, lithium difluoro(oxalato)borate, lithium difluorophosphate and lithium difluoro(oxalato)phosphate; and
the mass fraction of the lithium salt additive in the electrolyte is 0.1 wt% to 5 wt%.

Optionally, the positive electrode plate comprises a positive current collector and a positive electrode active material layer disposed on the positive current collector, and the positive electrode active material layer comprises a positive electrode active material;

the positive active material comprises $Li_aFe_{1-y}Mn_yPO_4$;
wherein $0.9 \leq a \leq 1.1$ and $0 \leq y \leq 1$.

The active material layer in the negative electrode plate comprises at least one of graphite and silicon-based materials.

The present application also provides an electric device comprising the above secondary battery.

The technical solution of the present application has the following advantages.

The secondary battery provided by the present application comprises a positive electrode plate, a negative electrode plate and electrolyte, wherein the electrolyte comprises an organic solvent, and the organic solvent comprises a cyclic ester solvent and a chain ester solvent; the secondary battery satisfies Formula (1). By optimizing the composition and content of the electrolyte and adjusting the active material layer of the negative electrode plate, the secondary battery has good dynamic performance at low temperature, good capacity retention rate and lower impedance under low temperature conditions, and lithium precipitation does not generally occur. The electrolyte is one of the main materials of the lithium ion battery and is one of the important factors influencing the performance of the secondary battery. The solvent is an important component of the electrolyte, and has great influence on the performances of the secondary battery such as cycle performance, impedance, dynamics and the like. By optimizing the electrolyte, negative electrode plate and battery capacity, and comprehensively designing parameters such as electrolyte solvent composition, electrolyte viscosity, electrical conductivity, and battery capacity, the present application can greatly improve the dynamic performance at low temperature of the secondary battery, reduce the impedance of the secondary battery, and improve the capacity retention rate at low temperature.

Among them, the cyclic ester solvent has high dielectric constant and high viscosity, the chain ester solvent has low dielectric constant and low viscosity, and the ratio of the cyclic ester solvent to the chain ester solvent is controlled in a proper range, so that the dynamic performance of the secondary battery is improved.

According to the secondary battery provided by the present application, the electrolyte viscosity influences the migration rate of lithium ions in the electrolyte, and the electrolyte viscosity is within the range of the present application, so that the transmission of the lithium ions can be further improved, which results in that the impedance of the secondary battery is reduced, and the cycle performance of the battery is improved. On the basis of satisfying Formula (1), the viscosity of the electrolyte is low, so that the transmission of lithium ions in the electrolyte is accelerated, and the dynamic performance is further improved.

By limiting the conductivity of the electrolyte, it can further ensure that the secondary battery will not have the phenomena of lithium precipitation and the like under the heavy current working condition.

The injection amount of the electrolyte in the secondary battery is influenced by the design capacity of the battery. When the injection amount is too small, it is difficult to completely infiltrate the positive and negative electrode plates, the de-intercalation degree of lithium ions in the charging and discharging process is influenced, and the impedance, the capacity, the cycle performance, the lithium precipitation and the like of the secondary battery are influenced. When the injection amount is too large, the side reactions are increased, resulting in the gas generation expansion phenomenon.

If the compacted density PD of the negative electrode active material layer in the negative electrode plate is too small, the energy density of the battery is influenced, so that the coating process of the negative electrode slurry is difficult to control; if the compacted density PD is too high, and the dynamic performance of the battery is influenced because the negative electrode active material layer is difficult to infiltrate by the electrolyte. By setting an appropriate compacted density PD, the dynamic performance and energy density of the battery can be further improved.

**DETAILED DESCRIPTION**

The following examples are provided to better understand the present application, not to limit the best embodiments, and not to limit the content and protection scope of the present application, and any product that is the same or similar to the present application and is obtained by any one by combining the present application with other features of the prior art under the inspiration of the present application falls within the protection scope of the present application.

The present application provides a secondary battery, which comprises a positive electrode plate, a negative electrode plate and electrolyte, wherein the negative electrode plate comprises a negative current collector and a negative electrode active material layer arranged on the negative current collector; the electrolyte comprises an organic solvent, and the organic solvent comprises a cyclic ester solvent and a chain ester solvent;

the secondary battery satisfies Formula (1),

$$27 > \frac{Mel. \times \sigma}{Cap. \times PD \times \eta \times \beta} > 18 \qquad \text{Formula (1)}$$

wherein $Mel.$ is a value of the weight of the electrolyte in the secondary battery, and the unit of the weight is g;
$\sigma$ is a value of the conductivity of the electrolyte, and the unit of the conductivity is mS/cm;
$Cap.$ is a value of a designed theoretical capacity of the secondary battery, and the unit of the designed theoretical capacity is Ah;
PD is a value of a compacted density of the negative electrode active material layer, and the unit of the compacted density is g/cm$^3$;
$\eta$ is a value of the viscosity of the electrolyte, and the unit of the viscosity is mPa·s; and
$\beta$ is a mass ratio of the cyclic ester solvent to the chain ester solvent in the electrolyte. For example, the value of Formula (1) may be 18.1, 18.3, 18.5, 18.7, 19.0, 19.3, 19.5, 19.7, 20.0, 20.2, 20.4, 20.6, 20.8, 21.0, 21.3, 21.5, 21.7, 22.0, 22.3, 22.5, 22.7, 23.0, 23.5, 24.0, 24.3, 24.7, 25.0, 25.5, 25.7, 26.0, 26.3, 26.5, 26.9 or a range consisting of any two of these values. When the value of the Formula (1) is in the above range, the electrolyte has better dynamic behavior, lithium ions have better diffusion rate due to high conductivity and low viscosity, and the compacted density is in a proper range, the lithium ions can rapidly migrate in a negative electrode plate, and a proper amount of electrolyte can timely supplement the consumed lithium ions to restore SEI, so that the electrolyte also has good cycle performance.

In some embodiments of the present application,

$$25.5 \geq \frac{Mel. \times \sigma}{Cap. \times PD \times \eta \times \beta} > 18$$

.

When the above range is satisfied, the low temperature performance is further improved, mainly because lithium ions rapidly migrate in the battery, and the formation of lithium dendrites caused by the rapid drop of the negative electrode potential is effectively prevented.

In some embodiments of the present application, the mass ratio $\beta$ of the cyclic ester solvent to the chain ester solvent is 0.25 to 0.85. For example, the mass ratio $\beta$ may be 0.25, 0.30, 0.33, 0.35, 0.38, 0.40, 0.43, 0.45, 0.47, 0.50, 0.53, 0.55, 0.57, 0.60, 0.63, 0.65, 0.67, 0.70, 0.72, 0.74, 0.78, 0.80, 0.82, 0.85, or a range consisting of any two of these values. When the mass ratio $\beta$ of the cyclic ester solvent to the chain ester solvent is in the above range, the viscosity of the electrolyte and the conductivity of the electrolyte remain relatively stable, which is conducive to the diffusion of lithium ions at low temperature, maintains the dynamic behavior of the lithium ions, and reduces the risk of lithium precipitation.

In some embodiments of the present application, the mass ratio $\beta$ of the cyclic ester solvent to the chain ester solvent is 0.33 to 0.82.

In some embodiments of the present application, the conductivity $\sigma$ of the electrolyte has a value of 9 to 13. For example, the conductivity $\sigma$ may be 9, 9.3, 9.5, 9.7, 10.0, 10.4, 10.7, 11.0, 11.3, 11.5, 11.7, 12.0, 12.2, 12.4, 12.5, 12.7, 13.0 or a range consisting of any two of these values. When the conductivity of the electrolyte is in the above range, lithium ions in the electrolyte can be rapidly diffused, the lithium ions removed from the positive electrode can reach the negative electrode more rapidly, the potential of the negative electrode is improved, the dynamic performance of the lithium ions can be effectively improved, and low temperature lithium precipitation is further improved.

In some embodiments of the present application, the conductivity $\sigma$ of the electrolyte has a value of 9.5 to 12.5.

The conductivity of the electrolyte can be measured using a DDSJ-308A conductivity meter.

In some embodiments of the present application, the viscosity $\eta$ of the electrolyte has a value of 2 to 5. For example, the value $\eta$ may be 2, 2.2, 2.4, 2.6, 2.8, 3.0, 3.3, 3.5, 3.7, 3.9, 4.0, 4.2, 4.4, 4.6, 4.8, 5.0 or a range consisting of any two of these values. When the viscosity $\eta$ of the electrolyte is in the above range, a higher $\eta$ indicates a higher viscosity of the electrolyte, which is not conducive to the diffusion of lithium ions at low temperatures and reduces the dynamic behavior of the lithium ions, thereby bringing a risk of lithium precipitation.

In some embodiments of the application, the viscosity $\eta$ of the electrolyte has a value of 2.5 to 4.5.

In the present application, the viscosity of the electrolyte may be measured using a 1835 Ubbelohde viscometer.

In some embodiments of the present application, the weight *Mel.* of the electrolyte has a value of 11 to 16. For example, the weight *Mel.* may be 11, 11.2, 11.5, 11.7, 12, 12.2, 12.4, 12.8, 13, 13.3, 13.5, 13.7, 14, 14.3, 14.5, 14.7, 15, 15.5, 16 or a range consisting of any two of these values. When the weight of the electrolyte is in the above range, the cycle gas generation amount of the battery is in a proper range, so that the explosion-proof valve is prevented from being exploded due to more increase of the internal pressure of the battery, and the battery is prevented from losing efficacy; meanwhile, the occurrence of bubble black spots on the interface of the negative electrode plate can be reduced, the electrolyte is able to provide lithium ion migration in a better way, so that the cycle performance and the dynamic performance of the battery are improved.

In some embodiments of the present application, the weight *Mel.* of the electrolyte has a value of 13 to 15. When the *Mel.* is in the above range, the electrolyte can better provide lithium ion migration, while the gas generation amount of the battery is less, and the comprehensive performance of the battery is better.

In some embodiments of the present application, the *Mel./ Cap.* has a value of 3 to 6.

In some embodiments of the present application, the PD has a value of 1.1 to 1.65. When the PD is in the above range, the compacted density affects the migration of lithium ions in the negative electrode. When the compacted density is too high, the diffusion rate of lithium ions decreases, particularly at low temperature, which will have a certain effect on the low temperature performance, leading to the occurrence of lithium precipitation; and if the compacted density is too high, it will have a certain effect on the wettability of the electrolyte.

In some embodiments of the present application, the PD has a value of 1.2 to 1.6.

In some embodiments of the present application, the chain ester solvent comprises at least one of a chain carbonate and a chain carboxylate.

In some embodiments of the present application, the chain carbonate comprises at least one of dimethyl carbonate, diethyl carbonate, dipropyl carbonate, ethyl methyl carbonate, and propyl methyl carbonate.

In some embodiments of the present application, the chain carboxylate comprises at least one of ethyl acetate, propyl acetate, methyl propionate, ethyl propionate, propyl propionate, methyl butyrate, and ethyl butyrate.

In some embodiments of the present application, the cyclic ester solvent comprises at least one of ethylene carbonate, propylene carbonate, and butylene carbonate.

In some embodiments of the present application, the electrolyte further comprises an additive, wherein the additive comprises at least one of a silicon-containing additive, a cyclic carbonate additive, and a sulfur-containing additive.

In some embodiments of the present application, the silicon-containing additive comprises at least one of tris(trimethylsilyl) phosphite, tris(trimethylsilyl) phosphate, tris(trimethylsilyl) borate, trimethylfluorosilane, and heptamethyldisilazane.

In some embodiments of the present application, the mass fraction of the silicon-containing additive is 0.1 wt% to 4 wt% based on the mass of the electrolyte.

In some embodiments of the present application, the cyclic carbonate additive comprises at least one of vinylene carbonate, vinyl ethylene carbonate, fluoroethylene carbonate, and difluoroethylene carbonate.

In some embodiments of the present application, the mass fraction of the cyclic carbonate additive is 0.05 wt% to 3 wt% based on the mass of the electrolyte.

In some embodiments of the present application, the sulfur-containing additive comprises at least one of 1, 3-propanesultone and ethylene sulfate.

In some embodiments of the present application, the mass fraction of the sulfur-containing additive is 0.05 wt% to 3 wt% based on the mass of the electrolyte.

In some embodiments of the present application, the additive of electrolyte comprises a silicon-containing additive and a sulfur-containing additive. Based on the mass of the electrolyte, the content of the silicon-containing additive is $W_{si}$%, the content of the sulfur-containing additive is $W_s$%, satisfying $0.3 <, W_{si} + W_s \leq 4$. When the electrolyte contains both the silicon-containing additive and the sulfur-containing additive, an SEI film with low impedance can be formed due to the interaction of them, which enables lithium ions to rapidly penetrate through the SEI film. When the sum of the contents of the silicon-containing additive and the sulfur-containing additive is in the above range, the film forming state is better, and the quality and the thickness of the formed protective film at this time are both in a better state, which improves the lithium ion diffusion.

In some embodiments of the present application, the additive of electrolyte comprises a silicon-containing additive and a sulfur-containing additive. Based on the mass of the electrolyte, the content of the silicon-containing additive is $W_{si}$%, the content of the sulfur-containing additive is $W_s$%, satisfying $0.1 <, W_{si}/W_s <, 5$. When $W_{si}/W_s$ is within the above range, the composition and thickness of the protective film formed can be further optimized, resulting in better comprehensive performance of the battery.

In some embodiments of the present application, the electrolyte further comprises a lithium salt additive. The lithium salt additive comprises at least one of lithium bis(fluorosulfonyl)imide, lithium bis(trifluoromethanesulfonyl)imide, lithium difluoro(oxalato)borate, lithium difluorophosphate and lithium difluoro(oxalato)phosphate. When the electrolyte comprises the lithium salt additive described above, the film impedance can be further reduced, and the film forming stability is improved, so that the diffusion of lithium ions is improved, and the cycle performance can also be good.

In some embodiments of the present application, the mass fraction of the lithium salt additive in the electrolyte is 0.1 wt% to 5 wt%.

In some embodiments of the present application, the positive electrode plate comprises a positive current collector and a positive electrode active material layer disposed on the positive current collector;

the positive electrode active material comprises $Li_aFe_{1-y}Mn_yPO_4$;
wherein $0.9 \leq a \leq 1.1$ and $0 \leq y \leq 1$.

In some embodiments of the present application, the positive electrode active material may further include a doping element, and the kind of the doping element is not limited as long as the performance of the positive electrode active material can be improved.

In some embodiments of the present application, the surface of the positive electrode active material has a coating layer.

In some embodiments of the present application, the coating layer comprises coating element(s), and the coating element(s) is/are not limited as long as the stability of the positive electrode active material can be improved.

In some embodiments of the present application, the positive active material surface comprises a carbon material layer. The carbon material layer comprises amorphous carbon.

The phosphate-based positive electrode active material has advantages of low cost, high safety, and the like, and thus is widely used in lithium batteries. However, the phosphate-based positive active material has poor mechanical properties at low temperature. When the phosphate-based positive electrode active material is used in combination with the electrolyte and the negative electrode plate of the present application, the low temperature performance of the battery can be greatly improved. The electrolyte, the phosphate-based positive electrode active material and the negative electrode plate of the present application all have good compatibility, which can make the formed film have low impedance and good stability, the cycle performance can be also good, and the low temperature lithium precipitation can be effectively ameliorated.

The examples do not indicate specific experimental procedures or conditions, and can be performed according to the procedures or conditions of the conventional experimental procedures described in the literature in the art. When the manufacturers of the reagents or instruments used are not indicated, they are conventional reagent or products that are commercially available.

**Example 1**

This example provides a lithium ion secondary battery having a designed theoretical capacity *Cap.* of 3.5 Ah, comprising a positive electrode plate, a negative electrode plate and electrolyte.

Preparation of the positive electrode plate: A positive electrode active material $LiFePO_4$, a conductive agent SP and a binder PVDF (ARKEMA HSV900, the same below) were mixed at a mass ratio of 96:2:2. After NMP was added, the mixture was stirred under vacuum until the system was uniform to obtain positive electrode slurry, and the positive electrode slurry was coated on a positive current collector aluminum foil. After drying and cold pressing, the positive electrode plate provided with a positive electrode active material layer was obtained, wherein the compacted density of the positive electrode active material layer is 2.45 $g/cm^3$.

Preparation of the negative electrode plate: Graphite, a conductive agent SP, a thickening agent CMC and a binder SBR (Japanese ZEON 451B, the same below) were mixed at a mass ratio of 96.2:1.2:1.2:1.4. After deionized water was added, the mixture was stirred under vacuum until the system was uniform to obtain negative electrode slurry, and the negative electrode slurry was coated on a negative current collector copper foil. After drying and cold pressing, the negative electrode plate provided with a negative electrode active material layer was obtained, wherein the compacted density of the negative electrode active material layer is 1.55 $g/cm^3$.

Preparation of the electrolyte: Ethylene carbonate (EC, a cyclic ester solvent), ethyl methyl carbonate (EMC, a chain carbonate solvent) and dimethyl carbonate (DMC, a chain carbonate solvent) were mixed at a ratio of 30:40:30 to obtain an organic solvent. $LiPF_6$ was added into the organic solvent, mixed well, followed by adding vinylene carbonate, ethylene sulfate, lithium difluorophosphate and tris(trimethylsilyl) phosphate to obtain the electrolyte, wherein the mass percentage content of the $LiPF_6$ is 12%, the mass percentage content of the vinylene carbonate is 1%, the mass percentage content of the ethylene sulfate is 1.5%, the mass percentage content of the lithium difluorophosphate is 0.5%, and the mass percentage content of the tris(trimethylsilyl) phosphate is 1%; wherein the mass ratio $\beta$ of the cyclic ester solvent to the chain ester solvent is 0.43, the conductivity of the electrolyte is 11.28 mS/cm, and the viscosity of the electrolyte is 3.46 mPa·s.

The positive electrode plate, a separator (SENIOR 14PP) and the negative electrode plate were stacked sequentially, so that the separator was between the positive electrode plate and the negative electrode plate, and a battery cell was obtained after winding; the battery cell was packaged in an aluminum plastic film, dried, and injected with 14g of electrolyte; after packaging, standing, forming and hot pressing, the secondary battery was obtained.

**Example 2**

The preparation method was substantially the same as that of Example 1, except for the compacted density of the negative electrode active material layer, which was 1.6$g/cm^3$.

**Example 3**

The preparation method was substantially the same as that of Example 1, except for the compacted density of the negative electrode active material layer, which was 1.45$g/cm^3$.

**Example 4**

The preparation method was substantially the same as that of Example 1, except for the electrolyte. Specifically, ethylene carbonate (EC, a cyclic ester solvent), ethyl methyl carbonate (EMC, a chain carbonate solvent), dimethyl carbonate (DMC, a chain carbonate solvent), and ethyl acetate (EA, a chain carboxylate solvent) were mixed at a ratio of 30:30:30:10. The mass ratio $\beta$ of the cyclic ester solvent to the chain ester solvent of the obtained electrolyte was 0.43, the conductivity of the electrolyte was 11.44 mS/cm, and the viscosity of the electrolyte was 3.32 mPa·s.

**Example 5**

The preparation method was substantially the same as that of Example 1, except for the electrolyte. Specifically, ethylene carbonate (EC, a cyclic ester solvent), ethyl methyl carbonate (EMC, a chain carbonate solvent), and dimethyl carbonate (DMC, a chain carbonate solvent) were mixed at a ratio of 27:40:33. The mass ratio $\beta$ of the cyclic ester solvent to the chain ester solvent of the obtained electrolyte was 0.37, the conductivity of the electrolyte was 11.09 mS/cm, and the viscosity of the electrolyte was 3.37 mPa s.

**Example 6**

The preparation method was substantially the same as that of Example 1, except for the electrolyte. Specifically, ethylene carbonate (EC, a cyclic ester solvent), ethyl methyl carbonate (EMC, a chain carbonate solvent), and dimethyl carbonate (DMC, a chain carbonate solvent) were mixed at a ratio of 25:45:30. The mass ratio β of the cyclic ester solvent to the chain ester solvent of the obtained electrolyte was 0.33, the conductivity of the electrolyte was 10.75 mS/cm, and the viscosity of the electrolyte was 3.3 mPa s.

**Example 7**

The preparation method was substantially the same as that of Example 1, except for the electrolyte. Specifically, ethylene carbonate (EC, a cyclic ester solvent), ethyl methyl carbonate (EMC, a chain carbonate solvent), and dimethyl carbonate (DMC, a chain carbonate solvent) were mixed at a ratio of 32:40:28. The mass ratio β of the cyclic ester solvent to the chain ester solvent of the obtained electrolyte was 0.47, the conductivity of the electrolyte was 11.52 mS/cm, and the viscosity of the electrolyte was 3.48 mPa·s.

**Example 8**

The preparation method was substantially the same as that of Example 1, except that ethylene sulfate was not included in the electrolyte. The mass ratio β of the cyclic ester solvent to the chain ester solvent of the obtained electrolyte was 0.43, the conductivity of the electrolyte was 11.18 mS/cm, and the viscosity of the electrolyte was 3.34 mPa·s.

**Example 9**

The preparation method was substantially the same as that of Example 1, except that ethylene sulfate and tris(trimethylsilyl) phosphate were not included in the electrolyte. The mass ratio β of the cyclic ester solvent to the chain ester solvent of the obtained electrolyte was 0.43, the conductivity of the electrolyte was 11.02 mS/cm, and the viscosity of the electrolyte was 3.4 mPa s.

**Example 10**

The preparation method was substantially the same as that of Example 1, except that ethylene sulfate, lithium difluorophosphate and tris(trimethylsilyl) phosphate were not included in the electrolyte. The mass ratio β of the cyclic ester solvent to the chain ester solvent of the obtained electrolyte was 0.43, the conductivity of the electrolyte was 10.85 mS/cm, and the viscosity of the electrolyte was 3.42 mPa·s.

**Example 11**

The preparation method was substantially the same as that of Example 1, except for the electrolyte. Specifically, 0.5% of lithium difluorophosphate, 1% of tris(trimethylsilyl) phosphate and 1.5% of ethylene sulfate were added. The mass ratio β of the cyclic ester solvent to the chain ester solvent of the obtained electrolyte was 0.43, the conductivity of the electrolyte was 11.12 mS/cm, and the viscosity of the electrolyte was 3.39 mPa·s.

**Example 12**

The preparation method was substantially the same as that of Example 1, except for the electrolyte. Specifically, 1.0% of vinylene carbonate, 0.5% of lithium difluorophosphate, 0.2% of ethylene sulfate and 1% of tris(trimethylsilyl) phosphate were added. The mass ratio β of the cyclic ester solvent to the chain ester solvent of the obtained electrolyte was 0.43, the conductivity of the electrolyte was 11.14 mS/cm, and the viscosity of the electrolyte was 3.41 mPa·s.

**Example 13**

The preparation method was substantially the same as that of Example 1, except for the electrolyte. Specifically, 1.0% of vinylene carbonate, 0.5% of lithium difluorophosphate, 0.7% of ethylene sulfate and 1.6% of tris(trimethylsilyl) phosphate were added. The mass ratio β of the cyclic ester solvent to the chain ester solvent of the obtained electrolyte was 0.43, the conductivity of the electrolyte was 11.25 mS/cm, and the viscosity of the electrolyte was 3.38 mPa s.

**Example 14**

The preparation method was substantially the same as that of Example 1, except for the electrolyte. Specifically, 1.0% of vinylene carbonate, 0.5% of lithium difluorophosphate, 2% of ethylene sulfate and 0.15% of tris(trimethylsilyl) phosphate were added. The mass ratio β of the cyclic ester solvent to the chain ester solvent of the obtained electrolyte was 0.43, the conductivity of the electrolyte was 11.21 mS/cm, and the viscosity of the electrolyte was 3.36 mPa·s.

**Example 15**

The preparation method was substantially the same as that of Example 1, except for the electrolyte. Specifically, 1.0% of vinylene carbonate, 0.5% of lithium difluorophosphate, 1.5% of ethylene sulfate and 3% of tris(trimethylsilyl) phosphate were added. The mass ratio β of the cyclic ester solvent to the chain ester solvent of the obtained electrolyte was 0.43, the conductivity of the electrolyte was 11.33 mS/cm, and the viscosity of the electrolyte was 3.33 mPa·s.

**Example 16**

The preparation method was substantially the same as that of Example 1, except for the electrolyte. Specifically, 1.0% of vinylene carbonate, 0.5% of lithium difluorophosphate, 2.5% of ethylene sulfate and 3% of tris(trimethylsilyl) phosphate were added. The mass ratio β of the cyclic ester solvent to the chain ester solvent of the obtained electrolyte was 0.43, the conductivity of the electrolyte was 11.32 mS/cm, and the viscosity of the electrolyte was 3.35 mPa·s.

**Example 17**

The preparation method was substantially the same as that of Example 1, except for the amount of the electrolyte. Specifically, the injected amount of the electrolyte was 13 g.

**Example 18**

The preparation method was substantially the same as that of Example 1, except for the amount of the electrolyte. Specifically, the injected amount of the electrolyte was 16 g.

**Example 19**

The production method was substantially the same as that of Example 1, except for the compacted density of the negative electrode. Specifically, the compacted density of the negative electrode active material layer was 1.68 g/cm$^3$.

**Comparative Example 1**

The preparation method was substantially the same as that of Example 1, except for the electrolyte. Specifically, ethylene carbonate (EC, a cyclic ester solvent), ethyl methyl carbonate (EMC, a chain carbonate solvent) and dimethyl carbonate (DMC, a chain carbonate solvent) were mixed at a ratio of 40:30:30. The mass ratio β of the cyclic ester solvent to the chain ester solvent of the obtained electrolyte was 0.67, the conductivity of the electrolyte was 12.01 mS/cm, and the viscosity of the electrolyte was 3.74 mPa·s.

**Comparative Example 2**

The preparation method was substantially the same as that of Example 1, except for the electrolyte. Specifically, ethylene carbonate (EC, a cyclic ester solvent), ethyl methyl carbonate (EMC, a chain carbonate solvent) and dimethyl carbonate (DMC, a chain carbonate solvent) were mixed at a ratio of 40:40:20. The mass ratio β of the cyclic ester solvent to the chain ester solvent of the obtained electrolyte was 0.67, the conductivity of the electrolyte was 11.84 mS/cm, and the viscosity of the electrolyte was 4.05 mPa s.

**Comparative Example 3**

The preparation method was substantially the same as that of Example 1, except for the electrolyte. Specifically, ethylene carbonate (EC, a cyclic ester solvent), ethyl methyl carbonate (EMC, a chain carbonate solvent) and dimethyl carbonate (DMC, a chain carbonate solvent) were mixed at a ratio of 40:15:45. The mass ratio β of the cyclic ester solvent to the chain ester solvent of the obtained electrolyte was 0.67, the conductivity of the electrolyte was 12.19 mS/cm, and the viscosity of the electrolyte was 3.66 mPa s.

**Comparative Example 4**

The preparation method was substantially the same as that of Example 1, except for the electrolyte. Specifically, ethylene carbonate (EC, a cyclic ester solvent), ethyl methyl carbonate (EMC, a chain carbonate solvent) and dimethyl carbonate (DMC, a chain carbonate solvent) were mixed at a ratio of 48:26:26. The mass ratio $\beta$ of the cyclic ester solvent to the chain ester solvent of the obtained electrolyte was 0.92, the conductivity of the electrolyte was 12.13 mS/cm, and the viscosity of the electrolyte was 4.43 mPa s.

**Comparative Example 5**

The preparation method was substantially the same as that of Example 12, except for the electrolyte. Specifically, 3.5% of vinylene carbonate, 0.5% of lithium difluorophosphate, 1% of tris(trimethylsilyl) phosphate, and 1.5% of ethylene sulfate were added. The mass ratio $\beta$ of the cyclic ester solvent to the chain ester solvent of the obtained electrolyte was 0.43, the conductivity of the electrolyte was 10.97 mS/cm, and the viscosity of the electrolyte was 3.68 mPa s.

**Comparative Example 6**

The preparation method was substantially the same as that of Example 1, except for the amount of the electrolyte. Specifically, the injected amount of the electrolyte was 10 g.

**Comparative Example 7**

The preparation method was substantially the same as that of Example 1, except for the electrolyte. Specifically, ethylene carbonate (EC, a cyclic ester solvent), ethyl methyl carbonate (EMC, a chain carbonate solvent) and dimethyl carbonate (DMC, a chain carbonate solvent) were mixed at a ratio of 20:40:40. The mass ratio $\beta$ of the cyclic ester solvent to the chain ester solvent of the obtained electrolyte was 0.25, the conductivity of the electrolyte was 10.48 mS/cm, and the viscosity of the electrolyte was 3.11 mPa·s.

Among them, the conductivity of the electrolyte in each of the Examples and Comparative Examples was measured by a conductivity meter at 25 °C; the viscosity of the electrolyte was measured by a viscometer at 25 °C.

**Test Examples**

The Test Examples provide the results of performance tests of the lithium ion secondary batteries provided in each of the Examples and Comparative Examples, as detailed below.

The method for testing the capacity retention rate of the battery comprises the following steps: fully charging the battery to an upper limit voltage, discharging the battery to a lower limit voltage at the temperature of 25 °C with 1C discharge current, and recording the discharge capacity $C_0$; fully charging to the upper limit voltage again at 25 °C, adjusting the temperature to -20 °C, discharging to the lower limit voltage with 1C discharging current, and recording the discharge capacity $C_1$. The capacity retention rate of the lithium ion secondary battery at -20 °C is $C_1/C_0$.

The method for testing the battery DCR (impedance) comprises the following steps: adjusting the electric quantity to 50% SOC with 1C discharge current at 25 °C, adjusting the temperature to -25 °C, discharging with 0.36C discharge current for 10s, and calculating the discharging DCR at -25 °C, wherein the calculation formula is $\Delta U/I$, wherein $\Delta U$ is the change value of the voltage before and after discharging, and I is the discharge current.

The method for testing the battery lithium precipitation comprises the following steps: adjusting the temperature to -10 °C, charging with 0.13C charging current to the upper limit of voltage, discharging with 1C discharging current to the lower limit of voltage, performing charge-discharge cycle for 10 circles, adjusting the temperature to 25 °C, charging with 1C charging current to the upper limit of voltage, disassembling the battery, and observing whether the interface has a lithium precipitation phenomenon. If the area of a lithium precipitation area on the surface of the negative electrode plate is less than 2%, it is considered to be no lithium precipitation. If the area of a lithium precipitation area on the surface of the negative electrode plate is more than or equal to 2% and less than 5%, it is considered to be slight lithium precipitation. If the area of a lithium precipitation area on the surface of the negative electrode plate is 5% to 50%, it is considered to be lithium precipitation. If the area of a lithium precipitation area on the surface of the negative electrode plate is more than 50%, it is considered to be severe lithium precipitation.

Table 1: results of performance test of lithium ion secondary batteries provided in each of the Examples and Comparative Examples

| | $\dfrac{Mel.\times\sigma}{Cap.\times PD\times\eta\times\beta}$ | capacity retention rate /% | -25°C DCR /mΩ | Whether or not lithium precipitation occurs at the interface |
|---|---|---|---|---|
| Example 1 | 19.6 | 91.8% | 480 | No lithium precipitation |
| Example 2 | 19.0 | 91.0% | 488 | No lithium precipitation |
| Example 3 | 20.9 | 92.5% | 475.3 | No lithium precipitation |
| Example 4 | 20.7 | 94.3% | 470.3 | No lithium precipitation |
| Example 5 | 23.0 | 93.1% | 475.8 | No lithium precipitation |
| Example 6 | 25.5 | 94.6% | 468.5 | No lithium precipitation |
| Example 7 | 18.2 | 88.1% | 489.3 | Slight lithium precipitation |
| Example 8 | 20.1 | 89.7% | 482.1 | No lithium precipitation |
| Example 9 | 19.5 | 88.2% | 484.9 | No lithium precipitation |
| Example 10 | 19.0 | 87.6% | 488 | Slight lithium precipitation |
| Example 11 | 19.7 | 85.8% | 474.3 | No lithium precipitation |
| Example 12 | 19.6 | 90.3% | 478.8 | No lithium precipitation |
| Example 13 | 20.0 | 90.70% | 480.4 | No lithium precipitation |
| Example 14 | 20.0 | 90.10% | 482.3 | No lithium precipitation |
| Example 15 | 20.4 | 89.3% | 485 | No lithium precipitation |
| Example 16 | 20.5 | 88.2% | 486.2 | Slight lithium precipitation |
| Example 17 | 18.2 | 88.8% | 483.7 | No lithium precipitation |
| Example 18 | 22.4 | 89.3% | 487.4 | No lithium precipitation |
| Example 19 | 18.1 | 85.0% | 494.6 | Slight lithium precipitation |
| Comparative Example 1 | 12.4 | 83.2% | 513.9 | Lithium precipitation |
| Comparative Example 2 | 11.3 | 82.8% | 520 | Lithium precipitation |
| Comparative Example 3 | 12.8 | 84.5% | 510.8 | Lithium precipitation |
| Comparative Example 4 | 7.7 | 80.3% | 528.4 | Severe lithium precipitation |
| Comparative Example 5 | 17.9 | 83.5% | 497.4 | Lithium precipitation |
| Comparative Example 6 | 14.0 | 81.5% | 501.8 | Lithium precipitation |
| Comparative Example 7 | 34.8 | 83.3% | 462.2 | No lithium precipitation |

According to the experimental results recorded in Table 1, it can be seen that, the parameters of the organic solvent, the negative electrode plate, and the battery cell in the secondary battery satisfy the specific relational expression, and the secondary battery has good capacity retention rate and low impedance at low temperature condition, and substantially no lithium precipitation phenomenon, with slight lithium precipitation in some cases (such as Example 15).

Specifically, by comparing Comparative Example 1 with Examples 4 to 6 and Comparative Example 4, it is found that lithium precipitation occurs when $\dfrac{Mel. \times \sigma}{Cap. \times PD \times \eta \times \beta}$ is less than 18, mainly due to the fact that the β value is too high, at which time the content of cyclic ester in the electrolyte is high, resulting in the viscosity of the electrolyte being too high at low temperature, which affects the dynamic behavior, resulting in the DCR being too large, and leading to lithium precipitation. By comparing Comparative Examples 1 to 3, it can be seen that, although the β values are the same, the differences in the specific compositions of the chain ester solvents also directly affect the viscosity and conductivity of the entire electrolyte, and thus the performance of the secondary battery.

Compared with Example 1, Comparative Example 7 has a value of $\dfrac{Mel. \times \sigma}{Cap. \times PD \times \eta \times \beta}$ which is more than 27, the low temperature performance is good, and no lithium is precipitated, but the capacity retention rate is obviously reduced at this time, mainly due to the amount of the cyclic carbonate is reduced, which is not favorable for the capacity retention rate of the cycles.

By comparing Examples 1 to 3 and Example 19, it is found that when the compacted density is too high, although the value $\dfrac{Mel. \times \sigma}{Cap. \times PD \times \eta \times \beta}$ in Example 19 is 18.1, which is more than 18, slight lithium precipitation still occurs, mainly because the compacted density is too high at this time, the difficulty of lithium ion de-intercalation is increased, and the low temperature performance of the secondary battery is affected, leading to a decrease of the capacity retention rate at low temperature of the secondary battery and the slight lithium precipitation phenomenon at the interface.

Examples 17 to 18, Comparative Example 6 and Example 1 are different in that the injection amount of the electrolyte is changed. When the injection amount is selected to be too low, $\dfrac{Mel. \times \sigma}{Cap. \times PD \times \eta \times \beta}$ is less than 18, the decrease of the injection amount of electrolyte results in the difficulty of infiltration of the positive and negative electrode plates, the increase of the impedance, and the phenomenon of lithium precipitation at the interface. It also reduces the capacity retention rate of the secondary battery at low temperature. In addition, the injection amount of electrolyte has an optimum range, and a higher injection amount also has a certain influence on the performance of the secondary battery.

The data of Example 1, Examples 8 to 16, and Comparative Example 5 shows that the difference of the additives has little influence on the viscosity and conductivity of the electrolyte. When one additive is too much, lithium precipitation still occurs, such as in Comparative Example 5. The secondary batteries prepared by different additive systems have different capacity retention rates and impedance performances at low temperatures, although they basically do not precipitate lithium. In addition, under the combined action of the cyclic carbonate additive, the silicon-containing additive, the sulfonate additive and the lithium salt additive, by reasonably designing the parameters of electrolyte, negative electrode active material layer, and the amount of the electrolyte in the secondary battery, and reasonably quantifying them, so that $\dfrac{Mel. \times \sigma}{Cap. \times PD \times \eta \times \beta}$ is more than 18, the secondary battery has higher capacity retention rate at the temperature of -20 °C, the problem of lithium precipitation does not occur at the temperature of -10 °C, and the secondary battery has better low temperature performance.

The data of Example 1 and Examples 12 to 16 shows that the secondary battery has better comprehensive performance when $0.3 \leq W_{si} + W_s \leq 4$ and $0.1 \leq W_{si}/W_s \leq 5$.

It should be understood that the above examples are only for clarity of illustration and are not intended to limit the embodiments. Other different forms of variations and modifications can be made by those skilled in the art in light of the above description. This need not be, nor should it be exhaustive of all embodiments. And obvious variations or modifications from the embodiments of the present application are still within the protection scope of the invention of the present application.

**Claims**

1. A secondary battery, comprising a positive electrode plate, a negative electrode plate and electrolyte, wherein the negative electrode plate comprises a negative current collector and a negative electrode active material layer arranged on the negative current collector; the electrolyte comprises an organic solvent, and the organic solvent comprises a cyclic ester solvent and a chain ester solvent;

the secondary battery satisfies Formula (1),

$$27 > \frac{Mel. \times \sigma}{Cap. \times PD \times \eta \times \beta} > 18 \qquad \text{Formula (1)}$$

wherein *Mel.* is a value of the weight of the electrolyte in the secondary battery, and the unit of the weight is g; $\sigma$ is a value of the conductivity of the electrolyte, and the unit of the conductivity is mS/cm; *Cap.* is a value of a designed theoretical capacity of the secondary battery, and the unit of the designed theoretical capacity is Ah; PD is a value of a compacted density of the negative electrode active material layer, and the unit of the compacted density is g/cm$^3$;
$\eta$ is a value of the viscosity of the electrolyte, and the unit of the viscosity is mPa·s; and
$\beta$ is a mass ratio of the cyclic ester solvent to the chain ester solvent in the electrolyte.

2. The secondary battery according to claim 1, wherein at least one of (1) to (3) is satisfied:

   (1) the mass ratio $\beta$ of the cyclic ester solvent to the chain ester solvent is 0.25 to 0.85;
   (2) the conductivity $\sigma$ of the electrolyte has a value of 9 to 13;
   (3) the viscosity $\eta$ of the electrolyte has a value of 2 to 5; and
   (4) the weight *Mel.* of the electrolyte has a value of 11 to 16.

3. The secondary battery according to claim 1, wherein the mass ratio $\beta$ of the cyclic ester solvent to the chain ester solvent is 0.33 to 0.82.

4. The secondary battery according to claim 1, wherein the conductivity $\sigma$ of the electrolyte has a value of 9.5 to 12.5.

5. The secondary battery according to claim 1, wherein the viscosity $\eta$ of the electrolyte has a value of 2.5 to 4.5.

6. The secondary battery according to claim 1, wherein the weight *Mel.* of the electrolyte has a value of 13 to 15.

7. The secondary battery according to any one of claims 1 to 6, wherein the PD has a value of 1.1 to 1.65.

8. The secondary battery according to claim 1, wherein the chain ester solvent comprises at least one of a chain carbonate and a chain carboxylate;

   the chain carbonate comprises at least one of dimethyl carbonate, diethyl carbonate, dipropyl carbonate, ethyl methyl carbonate and propyl methyl carbonate; and
   the chain carboxylate comprises at least one of ethyl acetate, propyl acetate, methyl propionate, ethyl propionate, propyl propionate, methyl butyrate and ethyl butyrate.

9. The secondary battery according to claim 1, wherein the cyclic ester solvent comprises at least one of ethylene carbonate, propylene carbonate, and butylene carbonate.

10. The secondary battery according to claim 1, wherein the electrolyte further comprises an additive comprising at least one of a silicon-containing additive, a cyclic carbonate additive and a sulfur-containing additive.

11. The secondary battery according to claim 10, wherein the additive satisfies at least one of the following features:

    (a) the silicon-containing additive comprises at least one of tris(trimethylsilyl) phosphite, tris(trimethylsilyl) phosphate, tris(trimethylsilyl) borate, trimethylfluorosilane and heptamethyldisilazane, and the mass fraction of the silicon-containing additive is 0.1 wt% to 4 wt% based on the mass of the electrolyte;
    (b) the cyclic carbonate additive comprises at least one of vinylene carbonate, vinyl ethylene carbonate, fluoroethylene carbonate and difluoroethylene carbonate, and the mass fraction of the cyclic carbonate additive is 0.05 wt% to 3 wt% based on the mass of the electrolyte; and
    (c) the sulfur-containing additive comprises at least one of 1,3-propanesultone and ethylene sulfate, and the mass fraction of the sulfur-containing additive is 0.05 wt% to 3 wt% based on the mass of the electrolyte.

12. The secondary battery according to claim 10, wherein the additive of electrolyte comprises a silicon-containing additive and a sulfur-containing additive, and wherein based on the mass of the electrolyte, the content of the silicon-containing additive is $W_{si}$%, the content of the sulfur-containing additive is $W_s$%, satisfying $0.3 \leq W_{si}+W_s \leq 4$ and $0.1 \leq W_{si}/W_s \leq 5$.

13. The secondary battery according to claim 1, wherein the electrolyte further comprises a lithium salt additive, wherein the lithium salt additive comprises at least one of lithium bis(fluorosulfonyl)imide, lithium bis(trifluoromethanesulfonyl)imide, lithium difluoro(oxalato)borate, lithium difluorophosphate and lithium difluoro(oxalato)phosphate; and the mass fraction of the lithium salt additive in the electrolyte is 0.1 wt% to 5 wt%.

14. The secondary battery according to claim 1, wherein the positive electrode plate comprises a positive current collector and a positive electrode active material layer disposed on the positive current collector, and the positive electrode active material layer comprises a positive electrode active material;

the positive active material comprises $Li_aFe_{1-y}Mn_yPO_4$;
wherein $0.9 \leq a \leq 1.1$ and $0 \leq y \leq 1$.

15. An electric device, comprising the secondary battery according to any one of claims 1 to 14.

<div align="center">

**INTERNATIONAL SEARCH REPORT**

</div>

| International application No. |
| --- |
| **PCT/CN2022/139579** |

**A.    CLASSIFICATION OF SUBJECT MATTER**

H01M10/0569(2010.01)i; H01M10/0567(2010.01)n; H01M10/052(2010.01)n

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS, CNKI, CNTXT, VEN: 电池, 负极, 阳极, 电解液, 环状, 链状, 碳酸酯, 重量, 质量, 电导率, 导电率, 容量, 压实密度, 粘度, 添加剂, 硅, 硫, 锂盐, battery, negative, anode, electrolyte, cycle, chain, carbonate, weight, mass, conduct+, capacity, compacted, density, viscosity, additive, Si, S, lithium, salt

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109119686 A (NINGDE CONTEMPORARY AMPEREX TECHNOLOGY CO., LTD.) 01 January 2019 (2019-01-01)<br>      description, paragraphs 0002-0056, and table 1 | 1-15 |
| Y | CN 110010871 A (JIANGXI UNIVERSITY OF SCIENCE AND TECHNOLOGY) 12 July 2019 (2019-07-12)<br>      description, paragraphs 0004-0018 | 1-15 |
| Y | CN 114204106 A (SONGSHAN LAKE MATERIALS LABORATORY) 18 March 2022 (2022-03-18)<br>      description, paragraphs 0017-0043, 0077-0078, and 0167 | 10-13 |
| A | CN 105552430 A (NINGBO INSTITUTE OF MATERIAL TECHNOLOGY AND ENGINEERING, CHINESE ACADEMY OF SCIENCES) 04 May 2016 (2016-05-04)<br>      entire document | 1-15 |
| A | CN 108134134 A (CHINA AVIATION LITHIUM BATTERY (LUOYANG) CO., LTD. et al.) 08 June 2018 (2018-06-08)<br>      entire document | 1-15 |

☑ Further documents are listed in the continuation of Box C.          ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **13 June 2023** | **16 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/139579**

**C.    DOCUMENTS CONSIDERED TO BE RELEVANT**

| Category* | Citation of document, with indication, where appropriate, of the relevant passages | Relevant to claim No. |
|---|---|---|
| A | CN 109119685 A (NINGDE CONTEMPORARY AMPEREX TECHNOLOGY CO., LTD.) 01 January 2019 (2019-01-01) entire document | 1-15 |

Form PCT/ISA/210 (second sheet) (July 2022)

**INTERNATIONAL SEARCH REPORT**
**Information on patent family members**

International application No.

**PCT/CN2022/139579**

| Patent document cited in search report | | | Publication date (day/month/year) | Patent family member(s) | | | Publication date (day/month/year) |
|---|---|---|---|---|---|---|---|
| CN | 109119686 | A | 01 January 2019 | US | 2020020980 | A1 | 16 January 2020 |
| | | | | WO | 2018232979 | A1 | 27 December 2018 |
| | | | | EP | 3447838 | A1 | 27 February 2019 |
| | | | | EP | 3447838 | A4 | 10 April 2019 |
| | | | | EP | 3447838 | B1 | 11 November 2020 |
| | | | | CN | 109119686 | B | 20 November 2020 |
| CN | 110010871 | A | 12 July 2019 | CN | 110010871 | B | 28 January 2022 |
| CN | 114204106 | A | 18 March 2022 | None | | | |
| CN | 105552430 | A | 04 May 2016 | TW | 201733194 | A | 16 September 2017 |
| | | | | TWI | 606626 | B | 21 November 2017 |
| | | | | WO | 2017152624 | A1 | 14 September 2017 |
| CN | 108134134 | A | 08 June 2018 | CN | 108134134 | B | 10 April 2020 |
| CN | 109119685 | A | 01 January 2019 | EP | 3419096 | A1 | 26 December 2018 |
| | | | | EP | 3419096 | B1 | 23 September 2020 |
| | | | | US | 2018375154 | A1 | 27 December 2018 |

Form PCT/ISA/210 (patent family annex) (July 2022)

**EP 4 394 990 A1**

## REFERENCES CITED IN THE DESCRIPTION

**Patent documents cited in the description**

- CN 202211260215